# EUROPÄISCHE PATENTANMELDUNG

(11) **EP 3 866 048 A1**
(43) Veröffentlichungstag der Anmeldung: **18.08.2021**
(21) Anmeldenummer: 20157275.7
(22) Anmeldetag: 13.02.2020
(51) Int. Cl.: G06F 30/3308, G06F 111/10, G06F 119/08

(54) **KONZEPT EINER GEKOPPELTEN ELEKTROTHERMISCHEN SIMULATION**

(71) Anmelder: FRAUNHOFER-GESELLSCHAFT zur Förderung der angewandten Forschung e.V., 80686 München (DE)
(72) Erfinder: SOHRMANN, Christoph, 01069 Dresden (DE)
(74) Vertreter: Burger, Markus

(57) **Zusammenfassung**

Die vorliegende Erfindung bezieht sich auf eine Vorrichtung zum Erstellen einer thermischen Ersatzschaltung eines physikalischen Aufbaus, bei der die Vorrichtung ausgelegt ist, um thermische Admittanzmatrizen basierend auf einer Modellierung eines physikalischen Aufbaus für eine Mehrzahl von Frequenzen zu bestimmen; und wobei die Vorrichtung ausgelegt ist, um eine thermische Ersatzschaltung basierend auf den thermischen Admittanzmatrizen für die Mehrzahl von Frequenzen zu bestimmen.

## Beschreibung

### Technisches Gebiet

Ausführungsbeispiele gemäß der Erfindung beziehen sich auf ein Konzept zur Erstellung einer thermischen Ersatzschaltung, einen Rechner zum Bestimmen einer solchen thermischen Ersatzschaltung sowie ein entsprechendes System und Verfahren.

### Hintergrund der Erfindung

Das Verhalten vieler technischer Systeme lässt sich durch Ersatzschaltungen beschreiben. Voraussetzung ist, dass eine mathematische Äquivalenz zwischen dem zu untersuchenden Problem und einem elektrischen Netzwerk besteht. Eine solche Ersatzschaltung ist oft intuitiver und kann beispielsweise mit einem vergleichsweise einfachen Schaltungssimulator analysiert werden.

Insbesondere aus dem Elektronikentwurf werden zum Beispiel thermische Ersatzschaltungen genutzt, die den Fluss des Wärmestroms zwischen den Bauelementen in einer elektronischen Schaltung modellieren. Die Spannungen in einer derartigen thermischen Ersatzschaltung entsprechen dabei den sich in den Bauelementen einstellenden Temperaturen.

In modernen elektronischen Schaltungen wirken sich thermische Effekte in erheblichem Maße auf ihr elektrisches Verhalten aus. Dabei liegt es hauptsächlich an der wachsenden Komplexität integrierter Schaltungen und die anhaltende Tendenz zu immer höheren Integrationsdichten und Taktfrequenzen, aber auch am Einsatz von Elektronik in technischen Systemen unter den verschiedensten Umgebungsbedingungen, dass eine Berücksichtigung von thermisch-elektrischen Wechselwirkungen bereits beim Schaltungsentwurf erforderlich wird.

Thermisch-elektrische Wechselwirkungen in elektronischen Schaltungen ergeben sich aus der Temperaturabhängigkeit elektrischer Parameter der Schaltungselemente.

Die schon erwähnte gestiegene Integrationsdichten bei elektronischen Schaltungen und der Einsatz von Elektronik unter extremen Umgebungsbedingungen, erfordern zunehmend die Berücksichtigung der thermisch-elektrischen Wechselwirkungen. Zudem beeinflussen deutlich höhere Taktfrequenzen ebenfalls die betreffenden elektronischen Schaltungen, wobei sich thermische Effekte auf einem solchen Chip zunehmend auf die Funktion der Schaltung auswirken. Daher sind Verfahren im Schaltungsentwurf, die thermischen Effekte im Chip nicht berücksichtigen, beispielsweise anhand von thermischen Ersatzschaltungen, nicht mehr sinnvoll einsetzbar.

Die Erstellung thermischer Ersatzschaltungen für den Elektronikentwurf wurde schon mehrfach in der Fachliteratur beschrieben, wie z.B. in den Referenzen [1-5]. Darin wird ausgehend von einer Wärmeleitungsgleichung und einer räumlichen Diskretisierung der technisch realisierten Schaltung das Problem als ein Matrix-Gleichungssystem formuliert. Aus diesem wird dann durch ein geeignetes Verfahren eine Ersatzschaltung mit äquivalentem Verhalten konstruiert. Als nachteilig erweist es sich, dass derartige Ersatzschaltungen jedoch so groß werden, dass sie für praxisrelevante Problemgrößen trotz der aktuell verfügbaren hohen Rechenressourcen nicht oder nur mit sehr großem Zeitaufwand gelöst werden können. Für den Einsatz im zeitkritischen Elektronikentwurf sind sie daher ungeeignet. Dies gilt auch für als Referenzen [6] und [7] bezeichnete Druckschriften.

Zur Lösung des Problems zu großer Ersatzschaltungen wurden mathematische Verfahren der Modellordnungsreduktion (MOR) vorgeschlagen, wie z.B. in den Referenzen [8-10]. Dabei wird die Größe des Matrix- Gleichungssystems reduziert, ohne das Verhalten der Ersatzschaltung wesentlich zu verändern.

Zu den wesentlichen Nachteilen dieser Verfahren zählt, dass:
- Modellordnungsreduktions-Verfahren durch einen erfahrenen Anwender parametrisiert werden müssen;
- die meisten MOR-Verfahren nur für lineare Probleme funktionieren; und
- Kenntnisse des zugrundeliegenden Gleichungssystems (Systemmatrizen) erforderlich sind.

Aufgrund der beschriebenen Nachteile vorhandener Ansätze existieren bisher keine kommerziellen Implementierungen. Daher hat einer gekoppelten elektrothermischen Simulation bisher keinen Eingang in die industrielle Praxis gefunden.

Daher ist es wünschenswert, zu einem Konzept zu gelangen, das die zuvor genannten Nachteile vermeidet. Die Kernidee der Lösung liegt darin, das thermische Problem statt wie in bisherigen Anwendungen im Zeitbereich, nunmehr im Frequenzraum zu betrachten. Dadurch kann eine Vielzahl etablierter Verfahren aus dem Bereich der linearen Netzwerktheorie, d.h. der Elektrotechnik, auf das thermische Problem übertragen werden und zur Lösung des Problems herangezogen werden.

Erfindungsgemäß sollen in einem Entwurf-Stadium mit einer thermischen Ersatzschaltung elektrothermische Wechselwirkungen analysiert werden, wobei thermisch bedingte Fehler bereits in dieser Phase vermieden werden können. So kann z.B. einem sogenannten thermischen Durchgehen (Englisch: "Thermal Runaway") der Schaltung vorgebeugt werden.

Das thermische Durchgehen bezeichnet die Überhitzung eines physikalischen Aufbaus einer technischen Apparatur aufgrund eines sich selbst verstärkenden, Wärme produzierenden Prozesses. Ein Durchgehen kann häufig zu einem Brand oder einer Explosion führen und bewirkt infolgedessen eine Zerstörung der Apparatur, z.B. durch Überdruck.

Um eine elektrothermische Analyse durchführen zu können, wird ein Verfahren zur Erstellung der thermischen Ersatzschaltung benötigt.

Dies wird durch den Gegenstand der unabhängigen Ansprüche der vorliegenden Anmeldung erreicht.

Weitere Ausführungsformen nach der Erfindung werden durch den Gegenstand der abhängigen Ansprüche der vorliegenden Anmeldung definiert.

### Zusammenfassung der Erfindung

Eine Ausführungsform gemäß dieser Erfindung bezieht sich auf eine Vorrichtung zum Erstellen einer thermischen Ersatzschaltung eines physikalischen Aufbaus, wobei die Vorrichtung ausgelegt ist, um thermische Admittanzmatrizen, die einen Zusammenhang zwischen Temperaturen an einer Mehrzahl von thermischen Ports, also thermischen Ein- und Ausgängen, über die Wärme zu- oder abfließen kann, und resultierenden Wärmeströmen beschreiben, basierend auf einer Modellierung eines physikalischen Aufbaus, zum Beispiel einer Schaltung mit elektrischen oder elektronischen Bauteilen, für eine Mehrzahl von Frequenzen einer thermischen Anregung zu bestimmen, beispielsweise unter Verwendung eines thermischen Simulationsprogramms; und wobei die Vorrichtung ausgelegt ist, um eine lineare thermische Ersatzschaltung basierend auf den thermischen Admittanzmatrizen für die Mehrzahl von Frequenzen zu bestimmen.

Mittels der Ersatzschaltung können die Temperaturen der Bauelemente einer elektrischen Schaltung durch eine einfache Schaltungssimulation ermittelt werden. Als Vorteil dieser Ausführungsform erweist sich die Vermeidung komplizierter, zeitaufwändiger Verfahren für die Lösung einer partiellen Differentialgleichung / Wärmeleitungsgleichung, wobei eine effiziente Berücksichtigung elektrothermischer Wechselwirkungseffekte zwischen Wärmeerzeugung und Wärmeausbreitung ermöglicht wird.

Eine Ausführungsform gemäß dieser Erfindung bezieht sich auf eine Vorrichtung zur thermischen Simulation eines physikalischen Aufbaus, wobei die Vorrichtung zur thermischen Simulation eine Vorrichtung zur Erstellung einer thermischen Ersatzschaltung aufweist, und wobei die Vorrichtung ausgelegt ist, um basierend auf der thermischen Ersatzschaltung und einer Information über eine thermische Anregung, z.B. einer an verschiedenen Ports des physikalischen Aufbaus anliegenden oder abfließenden Wärmemenge des physikalischen Aufbaus, z.B. Temperaturen an verschiedenen Ports des physikalischen Aufbaus eine thermische Antwort des physikalischen Aufbaus zu bestimmen.

Gemäß dieser Ausführungsform erfolgt eine Bestimmung der Temperatur innerhalb des physikalischen Aufbaus der elektrischen Schaltung durch direkte thermische Anregung an den Bauelementen, wobei vorteilhafterweise durch eine Eingrenzung der Anregung auf die relevanten thermischen Ports eine schnellere Modellerstellung ermöglicht wird.

Gemäß einer Ausführungsform ist die Vorrichtung zur thermischen Simulation ausgelegt, um eine elektrische Schaltung, die Teil des physikalischen Aufbaus ist, bzw. deren Schaltungselemente in einer thermischen Wechselwirkung mit dem physikalischen Aufbau stehen, zu simulieren.

Als technischer Effekt dieser Ausführungsform wird eine Temperaturausbreitung innerhalb des gesamten physikalischen Aufbaus simuliert. Vorteilhaft erweist es sich, dass der gesamte physikalische Aufbau im thermischen Ersatzschaltungsmodell abgebildet und bei dessen Simulation stets berücksichtigt wird.

Gemäß einer Ausführungsform ist die Vorrichtung zur thermischen Simulation ausgelegt, um die thermische Anregung abhängig von der Simulation der elektrischen Schaltung zu bestimmen, und/oder um die thermische Antwort des physikalischen Aufbaus bei der Simulation der elektrischen Schaltung zu berücksichtigen.

Dabei können sowohl das elektrische als auch das thermische Verhalten der Schaltung gleichzeitig bestimmt werden. Als Vorteil erweist sich, dass die Temperaturen ermittelt werden können, die im Betrieb der Schaltung aufgrund einer Wechselwirkung zwischen elektrischem und thermischem Verhalten entstehen.

Gemäß einer Ausführungsform weist die Vorrichtung zur thermischen Simulation eine Mehrzahl von elektrischen Elementen auf. Dabei wird eine Wechselwirkung zwischen verschiedenen Elementen der Schaltung in der thermischen Ersatzschaltung berücksichtigt. Dabei ist es möglich eine gegenseitige Erwärmung von Bauelementen durch das Modell korrekt vorherzusagen, wobei eine Unterschätzung der Temperatur vermieden werden kann.

Eine Ausführungsform gemäß dieser Erfindung bezieht sich auf ein Verfahren zum Erstellen einer thermischen Ersatzschaltung eines physikalischen Aufbaus, wobei mit dem Verfahren thermische Admittanzmatrizen basierend auf einer Modellierung eines physikalischen Aufbaus für eine Mehrzahl von Frequenzen bestimmt werden; und wobei eine thermische Ersatzschaltung basierend auf den thermischen Admittanzmatrizen für die Mehrzahl von Frequenzen bestimmt wird.

Auch hier können die Temperaturen der Bauelemente einer elektrischen Schaltung durch eine einfache Schaltungssimulation ermittelt werden. Als Vorteil dieses Verfahrens erweist sich die Vermeidung komplizierter, zeitaufwändiger Verfahren für die Lösung einer partiellen Differentialgleichung / Wärmeleitungsgleichung, wobei eine effiziente Berücksichtigung elektrothermischer Wechselwirkungseffekte zwischen Wärmeerzeugung und Wärmeausbreitung ermöglicht wird.

Eine Ausführungsform gemäß dieser Erfindung bezieht sich auf ein Verfahren zur thermischen Simulation eines physikalischen Aufbaus, das ein Verfahren zur Erstellung einer thermischen Ersatzschaltung aufweist, wobei mit dem Verfahren zur thermischen Simulation, basierend auf der thermischen Ersatzschaltung und einer Information über eine thermische Anregung des physikalischen Aufbaus eine thermische Antwort des physikalischen Aufbaus bestimmt wird.

Eine Bestimmung der Temperatur erfolgt hier innerhalb des physikalischen Aufbaus der elektrischen Schaltung durch direkte thermische Anregung an den Bauelementen, wobei vorteilhafterweise durch eine Eingrenzung der Anregung auf die relevanten thermischen Ports eine schnellere Modellerstellung ermöglicht wird.

Gemäß einer Ausführungsform wird mit dem Verfahren zur thermischen Simulation eine elektrische Schaltung, die Teil des physikalischen Aufbaus ist, simuliert.

Gemäß dieser Ausführungsform wird eine Temperaturausbreitung innerhalb des gesamten physikalischen Aufbaus simuliert. Vorteilhaft erweist es sich, dass der gesamte physikalische Aufbau im thermischen Ersatzschaltungsmodell abgebildet und bei dessen Simulation stets berücksichtigt wird.

Gemäß einer Ausführungsform wird mit dem Verfahren zur thermischen Simulation die thermische Anregung abhängig von der Simulation der elektrischen Schaltung bestimmt, und/oder die thermische Antwort des physikalischen Aufbaus wird bei der Simulation der elektrischen Schaltung berücksichtigt.

Sowohl das elektrische als auch das thermische Verhalten der Schaltung können demnach gleichzeitig bestimmt werden. Als Vorteil erweist sich, dass die Temperaturen ermittelt werden können, die im Betrieb der Schaltung aufgrund einer Wechselwirkung zwischen elektrischem und thermischem Verhalten entstehen.

Gemäß einer Ausführungsform umfasst das Verfahren zur thermischen Simulation ein Modellieren eines physikalischen Aufbaus in einem thermischen Simulationsprogramm, eine Auswahl von Ein- und Ausgängen als Ports eines mit dem thermischen Simulationsprogramm zu erstellenden thermischen Ersatznetzes, um eine thermische Admittanzmatrix unter Verwendung des thermischen Simulationsprogramms für verschiedene Frequenzen zu bestimmen.

Bei dieser Ausführungsform entkoppelt das Verfahren die Analyse des physikalischen Aufbaus und die Erstellung der thermischen Netzliste. Dadurch wird vorteilhafter Weiseein höherer Automatisierungsgrad möglich, durch Verwendung spezialisierter Algorithmen für die einzelnen Verfahrensschritte. Schwer automatisierbare Verfahren wie die Modellordnungsreduktion (MOR), können dadurch vermieden werden.

Gemäß einer weiteren Ausführungsform wird im Verfahren zur thermischen Simulation eine lineare, thermische Ersatzschaltung aus der Admittanzmatrix erstellt. Dadurch ist es möglich, eine Ersatzschaltung mit einem einfachen Schaltungssimulation zu simulieren, wobei eine Verwendung von Speziallösern für komplexe Matrizen vermieden werden kann.

Gemäß einer Ausführungsform erfolgt im Verfahren zur thermischen Simulation eine Reduktion von Nicht-Null-Elementen der Admittanzmatrix durch Ausnutzen linearer Abhängigkeiten innerhalb der Admittanzmatrix.

Als technischer Effekt ist eine Reduktion der Anzahl an Verbindungen zwischen den Bauelementen der resultierenden thermischen Ersatzschaltung möglich, wobei weniger Verbindungen eine kompaktere Ersatzschaltung erzeugt, welche in einer kürzerer Zeit simuliert werden kann.

Gemäß einer Ausführungsform erfolgt im Verfahren zur thermischen Simulation ein Approximieren der Admittanzmatrix mit rationalen Funktionen, deren frequenzabhängige Elemente aus vorhergehenden Berechnungen erhalten wurden.

Als technischer Effekt wird aus der Menge an Admittanzmatrizen (eine pro Frequenz, wie in den vorhergehenden Berechnungen) eine Matrixgleichung mit der Frequenz als expliziten Parameter gewonnen. Dabei ist es von Vorteil, aus der expliziten Frequenzabhängigkeit mittels Systemidentifikation die thermische Netzliste zu konstruieren.

Gemäß einer Ausführungsform des Verfahrens zur thermischen Simulation werden alle Matrixelemente der Admittanzmatrix gleichzeitig mit einem identischen Satz stabiler Pole nach einem Vektoranpassungsprinzip ausgestattet, wobei eine explizite Darstellung der durch Simulation gewonnenen Admittanzmatrizen erfolgt. Vorteilhaft ermöglicht ein gemeinsamer Satz Pole die Darstellung der Admittanzmatrizen als Matrixgleichung mit der Frequenz als expliziter Parameter.

Gemäß einer Ausführungsform des Verfahrens zur thermischen Simulation erfolgt eine Vorgabe einer mit Frequenz f oszillierenden Temperatur an einem Port, eine Vorgabe einer konstanten Temperatur an allen anderen Ports, resultierende (normierte) Wärmeströme ergeben an allen Ports eine Spalte der thermischen Admittanzmatrix Y(f), und eine Bestimmung aller Spalten von Y(f) erfolgt durch eine wiederholte Durchführung für verbleibende Ports.

Als technischer Effekt werden somit die thermische Simulation und die Erstellung der Admittanzmatrizen entkoppelt. Vorteilhaft kann ein solches Verfahren mit einer beliebigen Black-Box-Methode durchgeführt werden, wobei die bei anderen Verfahren notwendige Kenntnis der internen Gleichungssysteme so umgangen wird.

### Kurzbeschreibung der Zeichnungen

Die Zeichnungen sind nicht unbedingt maßstabsgetreu, sondern es wird in der Regel Wert darauf gelegt, die Prinzipien der Erfindung zu veranschaulichen. In der folgenden Beschreibung werden verschiedene Ausführungsformen der Erfindung mit Bezug auf die folgenden Zeichnungen beschrieben, in denen:
- Fig. 1: zeigt eine schematische Darstellung eines erfindungsgemäßen Verfahrens zum Erstellen einer thermischen Ersatzschaltung eines physikalischen Aufbaus; und
- Fig. 2: zeigt eine schematische Darstellung eines Teilbereichs des physikalischen Aufbaus aus Fig. 1.

### Detaillierte Beschreibung der Ausführungsformen

Gleiche oder gleichwertige Elemente oder Elemente mit gleicher oder gleichwertiger Funktionalität werden in der folgenden Beschreibung durch gleiche oder gleichwertige Referenzziffern bezeichnet, auch wenn sie in unterschiedlichen Zahlen vorkommen.

In der folgenden Beschreibung wird eine Vielzahl von Details dargelegt, um eine umfassendere Erklärung der Ausführungsformen der vorliegenden Erfindung zu ermöglichen. Einem Fachmann wird es jedoch klar sein, dass Ausführungsformen der vorliegenden Erfindung ohne diese spezifischen Details ausgeführt werden können. In anderen Fällen werden bekannte Strukturen und Vorrichtungen nicht im Detail, sondern im Blockdiagramm dargestellt, um zu vermeiden, dass die Ausführungsformen der vorliegenden Erfindung verborgen werden. Darüber hinaus können Merkmale der verschiedenen hierin beschriebenen Ausführungsformen miteinander kombiniert werden, sofern nicht ausdrücklich anders angegeben.

Wie schon erwähnt basiert die Erfindung auf einem Verfahren, welches die oben genannten Nachteile vermeidet. Die Kernidee der Lösung liegt darin, das thermische Problem statt wie üblich im Zeitbereich, im Frequenzraum zu betrachten. Dadurch kann eine Vielzahl etablierter Verfahren aus dem Bereich der linearen Netzwerktheorie, d.h. der Elektrotechnik, auf das thermische Problem übertragen werden und zur Lösung des Problems herangezogen werden.

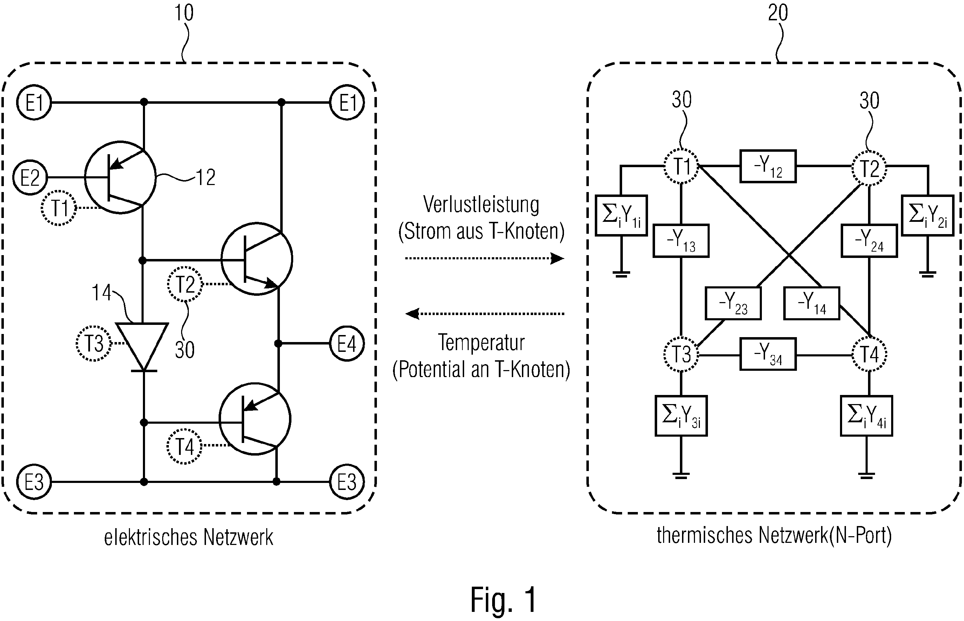

Fig. 1 zeigt skizzenhaft ein Ausführungsbeispiel, in dem das erfindungsgemäße Verfahren folgenden Ablauf aufweist:
1. Modellierung des physikalischen Aufbaus einer Schaltung 10 mit thermisch aktiven Bauelementen wie z.B. Transistoren 12, Dioden 14 etc., die eine jeweilige Verlustleistung aufweisen, wie sie beispielhaft in Fig. 1 dargestellt ist, einschließlich des Silizium-Wafers sowie sämtlicher thermischer Randbedingungen in einer thermischen Simulation (in einem thermischen Simulationsprogramm);
2. Wahl der Ports 30, d.h. der Ein- und Ausgange, für das zu erstellende thermische Ersatznetz;
3. Bestimmung einer thermischen Admittanzmatrix Y(f) unter Verwendung des thermischen Simulationsprogramms für verschiedene Frequenzen f;
4. Reduktion der Nicht-Null-Elemente der Admittanzmatrix Y(f) durch Ausnutzen linearer Abhängigkeiten innerhalb der Matrix; und
5. Erstellung einer linearen, thermischen Ersatzschaltung 20 aus den Admittanzmatrizen Y(f) z.B. durch ein Verfahren, das in der Referenz [11] beschrieben ist.

Zur Erstellung der thermischen Admittanzmatrix Y(f) kann folgendes Black-Box-Verfahren unter Verwendung der thermischen Simulation (des thermischen Simulationsprogramms) verwendet werden:
1. Vorgabe einer mit einer Frequenz f oszillierenden Temperatur an einem Port 30;
2. Vorgabe einer konstanten Temperatur an allen anderen Ports 30;
3. Resultierende (normierte) Wärmeströme an allen Ports ergeben eine Spalte der thermischen Admittanzmatrix Y(f)
4. Bestimmung aller Spalten der thermischen Admittanzmatrix Y(f) durch wiederholte Durchführung für verbleibende Ports (30)

In einem weiteren Ausführungsbeispiel kann die Admittanzmatrix Y(f) alternativ aus einer Impedanzmatrix Z(f) gewonnen werden. Dazu kann folgendes Verfahren verwendet werden:
1. Vorgabe eines mit Frequenz f oszillierenden Wärmestroms an einem Port 30, wobei eine null an allen anderen Ports ansteht;
2. Resultierende (normierte) Temperaturen an allen Ports 30 ergeben eine Spalte der thermischen Impedanzmatrix Z(f)
3. Bestimmung aller Spalten der der thermischen Impedanzmatrix Z(f) durch wiederholte Durchführung für verbleibende Ports;
4. Bestimmung der Admittanzmatrix durch Matrixinversion Y(f) = Z(f)⁻¹

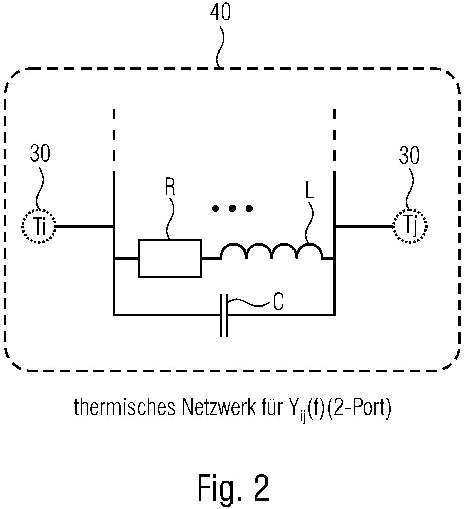

Fig. 2 zeigt eine schematische Darstellung eines Teilbereichs des physikalischen Aufbaus aus Fig. 1. Beispielhaft umfasst dieses thermische Teilnetzwerk der thermischen Ersatzschaltung zwischen den Ports Ti und Tj u.a. einen elektrischen Widerstand R in Reihe geschaltet mit einer Spule L und parallel geschaltet mit einem Kondensator C. etc.

Das erläuterte Verfahren zur Erstellung einer thermischen Ersatzschaltung bietet folgende Vorteile gegenüber bekannten Lösungen:
- Vermeidung komplizierter, parameterabhängiger mathematischer Verfahren der Modellordnungsreduktion, der sogenannten MOR-Verfahren;
- Stattdessen Verwendung eines einfachen simulationsbasierten Black-Box-Verfahrens;
- Die Kenntnis des mathematischen Gleichungssystems ist dafür nicht notwendig;
- Eine Linearität des Problems nicht unmittelbar erforderlich.

Der beschriebene Lösungsweg gestattet eine Implementierung innerhalb einer kommerziellen Software, welche eine einfach nutzbare elektrothermische Analyse in der Elektronikentwicklung ermöglicht.

Die Wirkung der o.a. beschriebenen Verfahren besteht darin, dass eine Verkopplung zwischen der elektrischen Verlustleistung der Bauelemente und der dadurch entstehenden Selbsterwärmung in der elektrischen Schaltung beschrieben werden kann. Dadurch kann zum einen die Temperaturerhöhung aufgrund elektrischer Verluste an beliebiger Stelle in der elektrischen Schaltung vorhergesagt werden. Zum anderen kann die durch Temperaturerhöhung verursachte Änderung der elektrischen Eigenschaften der Schaltung ermittelt werden. Der sich daraus ergebene Vorteil liegt darin, bereits bei der Entwicklung der physikalischen Schaltung nachteilige elektrothermische Kopplungseffekte zu identifizieren und zu vermeiden, wodurch ein zuverlässigerer Schaltungsaufbau erzielt wird.

Ein wesentlicher Vorteil besteht darin, dass die vorgeschlagene Lösung auch auf praktisch relevante Problemgroßen automatisiert angewendet werden kann. Dadurch können thermische Ersatznetze breitflächig in der Elektronikentwicklung eingesetzt werden, was zu einer Verbesserung der Robustheit und Zuverlässigkeit elektronischer Produkte beitragt.

Die o.a. Verfahren können in der Elektronikentwicklung eingesetzt werden, um die Auswirkungen elektrothermischer Wechselwirkungen auf das Schaltungsverhalten beispielsweise für Spannungsregler-Schaltungen (Power Management ICs - PMICs) oder Hochfrequenz- Leistungsverstärker (RF Power Amplifiers) zu untersuchen. Dadurch kann Effekten wie z.B. dem schon erwähnten thermischen Durchgehen (Englisch: "Thermal Runaway") bereits im Entwurf vorgebeugt werden. Die elektrische Schaltung wird dadurch sicherer und zuverlässiger für den Einsatz im Feld. Darüber hinaus lasst sich das Verfahren auch auf allgemeinere thermische Problemstellungen mit thermischen Quellen und Senken anwenden.

Obwohl bestimmte Kombinationen von Merkmalen in den Patentansprüchen angeführt und/oder in der Beschreibung offenbart sind, ist es nicht beabsichtigt, dass diese Merkmale die Offenbarung möglicher Implementierungen einschränken. Tatsächlich können zahlreiche dieser Merkmale auf Weisen kombiniert werden, die nicht spezifisch in den Patentansprüchen angeführt und/oder in der Beschreibung offenbart sind. Obwohl jeder der unten angeführten abhängigen Patentansprüche möglicherweise nur von einem oder einigen Patentansprüchen direkt abhängt, umfasst die Offenbarung möglicher Implementierungen jeden abhängigen Patentanspruch in Kombination mit allen anderen Patentansprüchen in dem Satz von Patentansprüchen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Ein erfindungsgemäß codiertes Signal, wie beispielsweise ein Audiosignal oder ein Videosignal oder ein Transportstromsignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden

Das erfindungsgemäße kodierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nicht-vergänglich bzw. nicht-vorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen:

[1] Fukahori, Kiyoshi, and Paul R. Gray. "Computer simulation of integrated circuits in the presence of electro thermal interaction." IEEE Journal of Solid-State Circuits 11.6 (1976): 834-846.
[2] Digele, Georg, Steffi Lindenkreuz, and Erich Kasper. "Fully coupled dynamic electro-thermal simulation." IEEE Transactions on Very Large Scale Integration (VLSI) Systems 5.3 (1997): 250- 257.
[3] S. Wunsche, C. Clauss, P. Schwarz and F. Winkler, "Electro-thermal circuit simulation using simulator coupling," in IEEE Transactions on Very Large Scale Integration (VLSI) Systems, vol. 5, no. 3, pp. 277-282, Sept. 1997.
[4] P. Wilkerson, A. Raman and M. Turowski,"Fast, automated thermal simulation of three-dimensional integrated circuits," The Ninth Intersociety Conference on Thermal and Thermomechanical Phenomena In Electronic Systems (IEEE Cat. No.04CH37543), Las Vegas, NV, USA, 2004, pp. 706-713 Vol.1.
[5] T. Casper, H. De Gersem and S. Schöps, "Automatic generation of equivalent electro thermal SPICE netlists from 3D electro thermal field models," 2016 17th International Conference on Thermal, Mechanical and Multi-Physics Simulation and Experiments in Microelectronics and Microsystems (EuroSimE), Montpellier, 2016, pp. 1-8.
[6] "Chip-scale electro thermal analysis", US9740804B2, URL: https://patents.google.com/patent/US9740804B2
[7] "Post-layout thermal-aware integrated circuit performance modeling", US9721059B1, URL: https://patents.google.com/patent/US9721059
[8] M. Salleras et al., "Comparison of model order reduction methodologies for thermal problems," EuroSimE 2005. Proceedings of the 6th International Conference on Thermal, Mechanical and Multi-Physics Simulation and Experiments in MicroElectronics and Micro-Systems, 2005., Berlin, Germany, 2005, pp. 60-65.
[9] Ting-Yuan Wang and Charlie Chung-Ping Chen, "SPICE-compatible thermal simulation with lumped circuit modeling for thermal reliability analysis based on modeling order reduction," International Symposium on Signals, Circuits and Systems. Proceedings, SCS 2003. (Cat. No.03EX720), San Jose, CA, USA, 2004, pp. 357-362.
[10] Feng, L., Yue, Y., Banagaaya, N. et al., "Parametric modeling and model order reduction for (electro-) thermal analysis of nanoelectronic structures", J.Math.Industry (2016) 6: 10.
[11] Gustavsen, Bjφrn. "Computer code for rational approximation of frequency dependent admittance matrices." IEEE Transactions on Power Delivery 17.4 (2002): 1093-1098.

## Patentansprüche

1. Vorrichtung zum Erstellen einer thermischen Ersatzschaltung eines physikalischen Aufbaus,
wobei die Vorrichtung ausgelegt ist, um thermische Admittanzmatrizen basierend auf einer Modellierung eines physikalischen Aufbaus für eine Mehrzahl von Frequenzen zu bestimmen; und
wobei die Vorrichtung ausgelegt ist, um eine thermische Ersatzschaltung basierend auf den thermischen Admittanzmatrizen für die Mehrzahl von Frequenzen zu bestimmen.

2. Vorrichtung zur thermischen Simulation eines physikalischen Aufbaus,
wobei die Vorrichtung zur thermischen Simulation eine Vorrichtung zur Erstellung einer thermischen Ersatzschaltung gemäß Anspruch 1 aufweist, und
wobei die Vorrichtung ausgelegt ist, um basierend auf der thermischen Ersatzschaltung und einer Information über eine thermische Anregung des physikalischen Aufbaus eine thermische Antwort des physikalischen Aufbaus zu bestimmen.

3. Vorrichtung zur thermischen Simulation nach Anspruch 2,
wobei die Vorrichtung ausgelegt ist, um eine elektrische Schaltung, die Teil des physikalischen Aufbaus ist, zu simulieren.

4. Vorrichtung zur thermischen Simulation nach einem der Ansprüche 2 oder 3,
wobei die Vorrichtung ausgelegt ist, um die thermische Anregung abhängig von der Simulation der elektrischen Schaltung zu bestimmen, und/oder
um die thermische Antwort des physikalischen Aufbaus bei der Simulation der elektrischen Schaltung zu berücksichtigen.

5. Vorrichtung zur thermischen Simulation nach einem der Ansprüche 2 bis 4,
wobei die thermische Ersatzschaltung eine Mehrzahl von elektrischen Elementen aufweist.

6. Verfahren zum Erstellen einer thermischen Ersatzschaltung eines physikalischen Aufbaus,
wobei mit dem Verfahren thermische Admittanzmatrizen basierend auf einer Modellierung eines physikalischen Aufbaus für eine Mehrzahl von Frequenzen bestimmt werden; und
wobei eine thermische Ersatzschaltung basierend auf den thermischen Admittanzmatrizen für die Mehrzahl von Frequenzen bestimmt wird.

7. Verfahren zur thermischen Simulation eines physikalischen Aufbaus,
wobei das Verfahren zur thermischen Simulation ein Verfahren zur Erstellung einer thermischen Ersatzschaltung gemäß Anspruch 6 aufweist, und
wobei mit dem Verfahren zur thermischen Simulation, basierend auf der thermischen Ersatzschaltung und einer Information über eine thermische Anregung des physikalischen Aufbaus eine thermische Antwort des physikalischen Aufbaus bestimmt wird.

8. Verfahren zur thermischen Simulation nach Anspruch 7,
wobei mit dem Verfahren zur thermischen Simulation eine elektrische Schaltung, die Teil des physikalischen Aufbaus ist, simuliert wird.

9. Verfahren zur thermischen Simulation nach einem der Ansprüche 7 oder 8,
wobei mit dem Verfahren die thermische Anregung abhängig von der Simulation der elektrischen Schaltung bestimmt wird, und/oder
die thermische Antwort des physikalischen Aufbaus bei der Simulation der elektrischen Schaltung berücksichtigt wird.

10. Verfahren zur thermischen Simulation nach einem der Ansprüche 7 bis 9, umfassend:
- Modellieren eines physikalischen Aufbaus in einem thermischen Simulationsprogramm,
- Auswählen von Ein- und Ausgängen als Ports eines mit dem thermischen Simulationsprogramm zu erstellenden thermischen Ersatznetzes,
- um eine thermische Admittanzmatrix Y(f) unter Verwendung des thermischen Simulationsprogramms für verschiedene Frequenzen (f) zu bestimmen.

11. Verfahren zur thermischen Simulation nach einem der Ansprüche 7 bis 10, wobei
- eine lineare, thermische Ersatzschaltung aus der Admittanzmatrix Y(f) erstellt wird.

12. Verfahren zur thermischen Simulation nach einem der Ansprüche 7 bis 11, wobei eine Reduktion von Nicht-Null-Elementen der Admittanzmatrix Y(f) durch Ausnutzen linearer Abhängigkeiten innerhalb der Admittanzmatrix Y(f) erfolgt.

13. Verfahren zur thermischen Simulation nach einem der Ansprüche 7 bis 12, wobei ein Approximieren der Admittanzmatrix Y(f) mit rationalen Funktionen erfolgt, deren frequenzabhängige Elemente aus Berechnungen erhalten wurden.

14. Verfahren zur thermischen Simulation nach einem der Ansprüche 7 bis 13, wobei ein alle Matrixelemente der Admittanzmatrix Y(f) gleichzeitig mit einem identischen Satz stabiler Pole nach einem Vektoranpassungsprinzip ausgestattet werden.

15. Verfahren zur thermischen Simulation nach einem der Ansprüche 7 bis 14, wobei
- eine Vorgabe einer mit Frequenz f oszillierenden Temperatur an einem Port erfolgt,
- eine Vorgabe einer konstanten Temperatur an allen anderen Ports erfolgt,
- resultierende (normierte) Wärmeströme an allen Ports eine Spalte der thermischen Admittanzmatrix Y(f) ergeben, und
- eine Bestimmung aller Spalten von Y(f) durch wiederholte Durchführung für verbleibende Ports erfolgt.

16. Computerprogramm mit einem Programmcode, zum Ausführen eines Verfahrens nach einem der Ansprüche 6 bis 15 auf einem Computer.
